# EUROPEAN PATENT SPECIFICATION

(11) **EP 1 803 352 B1**
(45) Date of publication and mention of the grant of the patent: **14.04.2010**
(21) Application number: 05425944.5
(22) Date of filing: 30.12.2005
(51) Int. Cl.: A21C 15/00

(54) **Apparatus for handling toasted bread slices sent to packaging**
Vorrichtung zur Behandlung von getoasteten Brotscheiben auf dem Weg zur Verpackung.
Dispositif pour la manipulation de tranches de pain toasté envoyées pour être emballées

(43) Date of publication of application: 04.07.2007
(73) Proprietor: Barilla G. e R. Fratelli S.p.A., 43100 Parma (IT)
(72) Inventor: Pirenei, Alessandro, Barilla G. & R. Fratelli SpA, 43100 Parma (IT)
(74) Representative: Zambardino, Umberto

(56) References cited:
- EP-A- 1 190 778
- DE-A1- 3 436 923
- GB-A- 739 385
- GB-A- 898 188
- GB-A- 993 998
- GB-A- 2 312 410

## Description

### Field of application

In its more general aspect, the present invention relates to an apparatus for handling toasted bread slices sent to packaging, that is, over the segment of the bread slice production lines that lies between the toasting oven and the packaging station.

More specifically, this invention concerns an apparatus for the automatic and continuous rejection of defective toasted bread slices from flanking rows of toasted bread slices continuously transported towards packaging, and for aligning each row of toasted bread slices which, upon exiting the toasting oven, are anomalously positioned with respect to the desired arrangement in aligned rows in the direction of travel.

In the remainder of the description and in the subsequent claims, by the terms: defective toasted bread slices, are meant those bread slices which, upon exiting a respective toasting oven, are positioned anomalously with respect to the parallel row arrangement in which the bread slices have travelled through said oven, or exhibit a shape different from the traditional smooth and flattened one of so-called regular toasted bread slices, for example, a concave or convex shape with respect to the conveyor surface, or are coupled in partial or total superimposition.

### Prior Art

It is known that, when exiting a continuous toasting oven, toasted bread slices are arranged on a conveyor belt in more or less straight and parallel flanking rows and in substantially closed ranks and in such layout, which is also that in which they travel throughout said oven on a dedicated belt (commonly known as oven mesh), they are fed to a channelling surface, sloping down in the bread slice - travel direction, which conveys them by gravity to a conveyor system, also channelled. Such conveyor system directs the toasted bread slices, still in adjacent rows, to one or more packaging stations.

The aforementioned channelled conveyor system essentially consists of a plurality of parallel mini conveyor belts (one for each bread slice row), separated from each other by a corresponding plurality of flat, knife-type sections extending along the entire length of the conveyors in the bread slice - travel direction and supported by the stationary frame supporting the entire system.

It is also known that upon exiting the toasting oven, not all the bread slices are shaped and structured according to convention, that is, in a smooth and flattened substantially rectangular shape deriving from the original sandwich bread loaf. In fact, a sometimes considerable proportion of the bread slices turns out to be defective: pairs of bread slices that are overlapping, deformed, mis-arranged, broken, and so on. Defective bread slices can easily cause great setbacks in the general travel towards packaging, with deriving obstructions in the corresponding production line, obstructions which cause having to stop said line and the need to divert the bread slices exiting the oven to large temporary storage units.

To overcome such a problem, it is known to sort the defective bread slices and also suitably align the regular bread slices, manually or preferably by means of automated systems.

Patent application EP 1990778, in the name of this applicant, describes an apparatus for the automated sorting and discarding of defective bread slices from flanking bread slice rows continuously fed and in a predetermined direction of travel towards a packaging station. In such apparatus, the mini conveyor belts are provided with a square- raised egde along one side and they extend along a path segment of the respective bread slice - active conveyor branches in sub-vertical position, inclined on the side provided with raised edge, thanks to the presence of a plurality of plate-shaped guides that support and guide each bread slice - active conveyor branch along said path segment and in said inclined position.

In this position, the centre of gravity of the defective toasted bread slices falls outside the raised edge , thus causing said bread slices to fall out from the mini belts while regular bread slices remain on the mini belts held back by the respective raised edges.

Although the aforementioned apparatuses, in particular those which involve the automated removal as described above, are functionally satisfactory, some problems remain which must be overcome.

In particular, during the operation of the aforementioned apparatuses, it can frequently happen that, owing to deviations from the direction of travel of the slices, mainly on the part of the cooking oven belt or mesh, and, to a more limited extent, of the conveyor belt of the toasted bread slices in flanking rows exiting the toasting oven, the toasted bread slices of said flanking rows undergo along the path upon said belts, a shift in the direction transversal to that of travel of the slices. The extent of this shift (generally a few centimetres) increases with the increasing belt length (the cooking oven meshes may be even several metres long) and may be such as to create a substantial misalignment between the toasted bread slices of the flanking rows close to the channelling chute and the inlet to the chute channels.

In such an event, the toasted bread slices are thus inappropriately fed to the channelling chute and may rotate during descent into the chute corridors (for example, by 90°), which may result in the possibility of the toasted bread slices piling up and/or breaking at the point of feeding to the mini conveyor belts, considering in fact that the latter have a width equal to or slightly larger than the width of a toasted bread slice, and/or the possibility of the toasted bread slices being inadequately conveyed onto said mini conveyor belts.

Consequently, a noticeable increase in waste material occurs, to the point of having to stop the toasted bread slice production line.

The problem underlying the present invention is to devise and provide an apparatus for handling toasted bread slices sent to packaging, in particular comprising automated sorting and discarding of the defective toasted bread slices from bread slice rows sent continuously to packaging, having functional and structural characteristics such as to overcome the aforementioned drawbacks.

### Summary of the Invention

According to the invention, the problem is solved by an apparatus according to claim 1 and following. In particular, the aforementioned technical problem is solved by an apparatus for handling toasted bread slices sent to packaging, said toasted bread slices being arranged in flanking rows on a conveyor and made to travel in a predetermined direction of travel towards a packaging station, the apparatus comprising:
- a channelling surface provided with corridors to receive said flanking toasted bread slice rows incoming from the conveyor, a toasted bread slice row in each corridor,
- at least one plurality of mini belts arranged downstream from the channelling surface relative to the direction of travel of said toasted bread slices, each mini belt having a bread slice - active conveyor branch placed so as to receive a toasted bread slice row from a corresponding corridor of the channelling surface,
   the apparatus being characterized in that it comprises:
- means of translating said channelling surface in a direction perpendicular to the bread slice - travel direction.
- means of binding in translation said at least one plurality of mini belts to the channelling surface at the upstream end of said mini belts and of enabling an angular movement about the opposite downstream end, and
- motor means linked to detection means of the position of toasted bread slices of said flanking rows on said conveyor so as to translate said channelling surface and thereby dragging said at least one plurality of mini belts in the case of a substantial misalignment of said toasted bread slice rows from the respective channelling surface corridors, until substantial alignment is restored.

The characteristics and advantages of the apparatus according to the invention will be made clear in the following description of an embodiment thereof, which is given for indicative and non-limiting purposes, with reference to the attached drawings.

In such drawings:

### Brief Description of the drawings

- Figure 1 shows a perspective and schematic view of the apparatus according to the invention;
- Figure 2 schematically represents the side view of the same apparatus of fig 1;

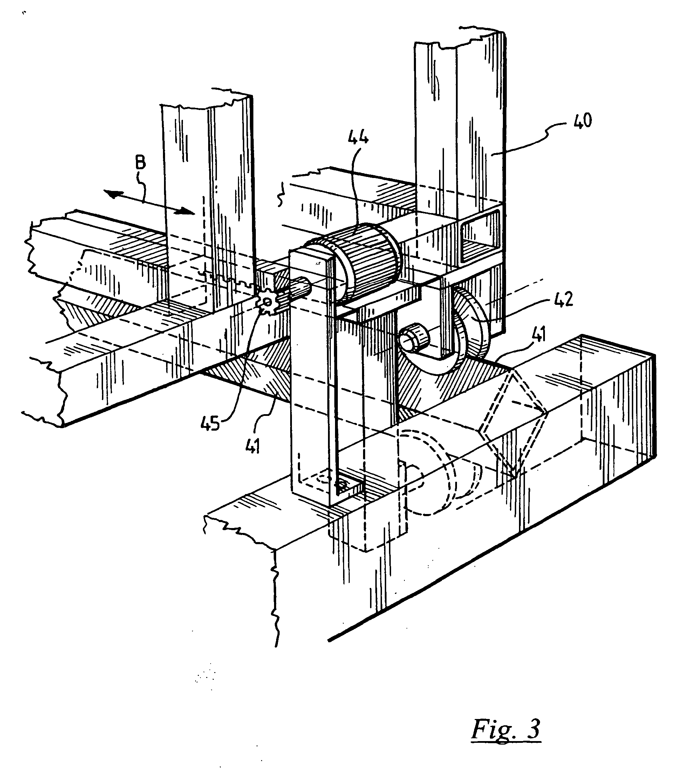

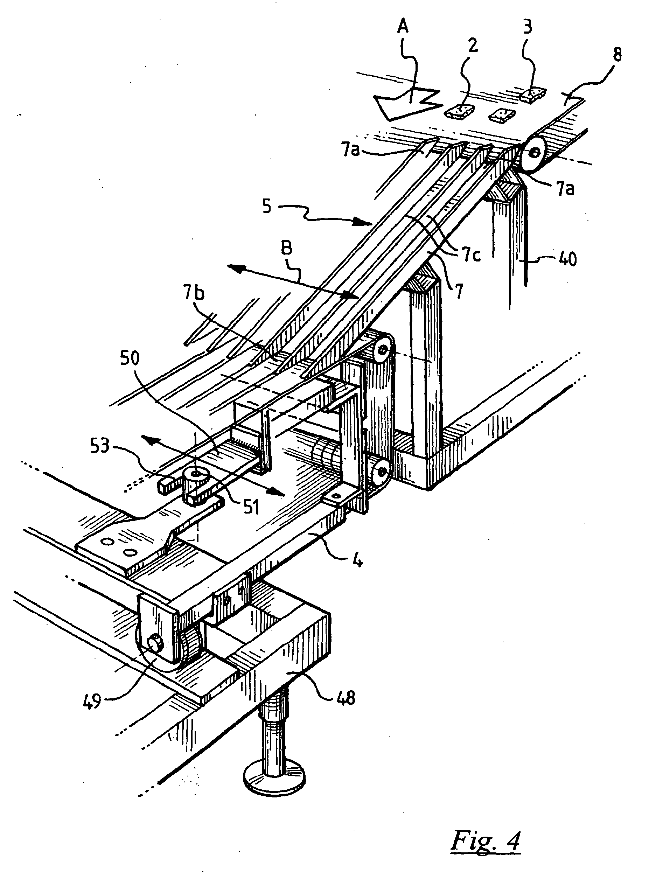

- Figures 3 to 5 each show a perspective and schematic view of a detail of the apparatus of figure 1;
- Figure 6 represents a contruction detail of fig. 5 in enlarged scale and in partial section;
- Figure 7 schematically represents a section taken along line VI-VI of fig. 6;
- Figure 8 schematically represents a section taken along line VII-VII of fig. 6;
- Figures 9 to 12 schematically represent successive processing steps carried out with the apparatus of figures 1 to 8.

### Detailed Description

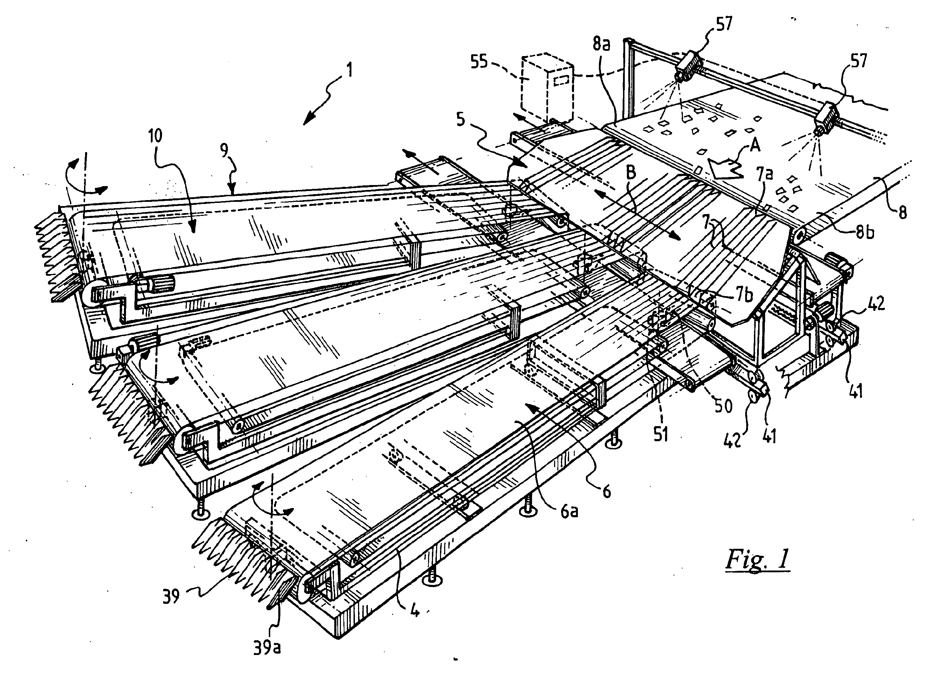

With reference to such figures, fig. 1 globally and schematically represents an apparatus for handling toasted bread slices sent to packaging, manufactured according to the present invention.

More specifically, apparatus 1 has been devised to automatically and continuously sort and discard any defective toasted bread slices 3 from flanking toasted bread slice rows, continuously conveyed along a direction of travel A, from a toasting oven to a packaging station, neither of which are illustrated, being conventional.

In the remainder of the description and in the subsequent claims, the terms "upstream" and "downstream" are used in relation to the aforementioned direction A.

Apparatus 1 of the present invention is also capable of aligning each row of toasted bread slice 2,3 which, upon exiting the toasting oven, are arranged anomalously with respect to the desired arrangement in aligned rows in the direction of travel, so as to be in accordance and in fulfillment of technical requirements of a possible automated packaging.

Advantageously, apparatus 1 is structured so as to constitute a segment of a bread slice production line, which lies between a bread slice toasting oven and a corresponding packaging station.

Upon exiting the continuous toasting oven, the toasted bread slices 2, 3 are arranged on a conveyor belt 8 in more or less straight and parallel flanking rows and in substantially closed ranks. Rows of bread slices 2, 3, which have travelled through the oven in this arrangement, are fed to a channelling surface 5, which slopes down in the bread slice - travel direction A and which, by gravity, conveys them towards a conveyor system, globally indicated by 9, by means of which automated sorting and discarding of toasted bread slices 3 occur, as will be better explained in the remainder of the description.

More specifically, the channelling surface 5 is supported onto a frame 40 and comprises a plurality of contiguous, substantially channelled corridors 7, having inlet end 7a at the terminal edge of the conveyor belt 8 and opposite discharge end 7b situated in contact with the conveyor system 9. The corridors 7 are defined by longitudinal sideboards 7c, extending one divergent from the other (substantially fan-shaped) so as to display flared respective discharge ends 7b, to facilitate the distribution of the rows of bread slices 2, 3 on conveyor system 9.

In the present embodiment, the conveyor system 9, located downstream of the channelling surface 5, comprises three essentially flanking beds each having a plurality of endless, flexible, parallel conveyor belts 6, independent from one another and having respective active branches 6a, or bread slice - conveyor branches made to move along a path extending in the direction of travel A.

Obviously, a larger or smaller number of beds may be envisaged, or even a single conveyor belt bed 6 to meet contingent and specific requirements.

Conveyor branches 6a are arranged flanking each other and the channelling surface 5 is in contact on an upstream end portion of the conveyor branches 6a in such a way that each conveyor branch 6a essentially coincides with discharge end 7b of a respective corridor 7 of said channelling surface 5, at said upstream end portion.

Since said belts 6 have a width equal to or slightly greater than the width of a toasted bread slice, that is, a very small width compared to the conventional conveyor belts used in the food industry, in the remainder of the description and in the subsequent claims said conveyor belts 6 will be referred to as "mini belts".

Mini belts 6 of each bed together form an endless conveyor belt, globally indicated by 10, supported by a respective frame 4 and made to move in the bread slice - direction of travel A towards the packaging station, as will be apparent in the remainder of the description.

According to the present invention, channelling surface 5 is mobile transversally, that is, in a direction B perpendicular to the bread slice - direction of travel A whereas each plurality of the mini belts 6 is bound in translation to the channelling surface 5 at the upstream end for an angular movement with respect to the opposite end (downstream end).

More specifically, the translation movement of the channelling surface 5 is achieved by the sliding of the support frame 40 along tracks 41 by means of wheels 42 provided underneath the frame 40 and fixed thereon. Motor means comprising a motor 44 and a toothed rack system 45 drive the channelling surface 5 in translation.

The support frame 4 of each plurality of mini belts 6 is pivoted at a downstream end onto a pivot 46 attached to a fixed frame 48 underneath, and is provided with a plurality of wheels 49 arranged between the downstream and upstream ends thereof in distanced relation one to the other by a predefined extent such that the mini belts 6 with corresponding support frame 4 are angularly shiftable around said pivot 46.

Apparatus 1 is provided with means for dragging each plurality of mini belts 6 with respective support frame 4 in conjunction with the translation of the channelling surface 5 in the transversal direction B, to bind in translation each plurality of the mini belts 6 to the channelling surface 5.

In the present embodiment, such dragging means are in the form of at least one plate 50 associated with the support frame 40 of the channelling surface 5 and projecting towards the support frame 4 of a corresponding plurality of mini belts 6, as well as a pivot 51 associated with each support frame 4 of a plurality of mini belts 6 and substantially located at the upstream end thereof.

More specifically, each plate 50 is provided with a forked or open slit 53 in which is slidably engaged a pivot 51, associated with a support frame 4 of a plurality of mini belts 6.

According to the present invention, apparatus 1 is also provided with detection means of the position of the toasted bread slices 2 and 3 on at least one active zone of the conveyor belt 8 situated near the downstream end thereof, said detection means communicating with a command and control unit 55 which in turn is able to command the activation of motor means and in particular of translation driving motor 44 of the channelling surface 5, in the manner that will be better illustrated in the remainder of the description.

In the present embodiment, the detection means are in the form of a pair of video cameras 57 located above the conveyor belt 8 so as to detect the position of toasted bread slices of flanking rows in two respective contiguous active zones situated near the downstream end thereof, each contiguous active zone being defined, in the direction transversal to that of bread slice - travel direction A, by a respective edge 8a, 8b, of the conveyor belt 8 and the centre line of the same belt 8.

The detection of the "position" may involve for example, by techniques known as such, in the detection of the contour of at least some of the toasted bread slices among a predetermined number of flanking toasted bread slice rows in the active zones of the conveyor belt 8, according to predetermined reading parameters up to the possible determination of the centre of gravity of said toasted bread slices. As a non-limiting example, the video cameras 57 may each be set in such a way as to detect the "position" of the toasted bread slices (some or all of them) of 11 flanking rows entering a respective active zone. The position data of the toasted bread slices 2,3 in the active zones in proximity of the edge of the conveyor belt 8, as detected by the video cameras 57, are transmitted, preferably at predetermined transmission frequencies, to the command and control unit 55 which compares them with position data of the channelling surface 5 (and thus of the respective corridors 7). Position data of the channelling surface 5 are always known to the command and control unit 55 as they are transmitted to the command and control unit 55 by a dedicated encoder, not shown, associated with plate 50 of the channelling surface 5. Therefore, whenever the aforementioned comparison reveals a situation of substantial misalignment between the toasted bread slice rows near the edge of the conveyor belt 8 and the corridors 7 of the channelling surface 5, the command and control unit 55 starts the motor so as to shift the channelling surface 5 in the transversal direction B to an extent such as to substantially restore the alignment.

At the same time, each plurality of mini belts 6 with corresponding support frame 4 is dragged by angular movement about a respective pivot 46 situated at the downstream end of the plurality of mini belts due to the engaging of a plate 50 of the frame of the channelling surface 5 with a corresponding pivot 51 associated with the support frame 4 of the plurality of mini belts and situated at the upstream end thereof.

In such a way, toasted bread slices that reach the edge of the conveyor belt 8 can be appropriately fed into the corridors 7 of the channelling surface 5, thus eliminating or substantially limiting the rotation freedom of the toasted bread slices in said corridors and the deriving problems of product pile up at the point of feeding onto the mini conveyor belts 6.

Furthermore, it should be noted that the extent of the translation of the channelling surface 5 and the extent of angular shifting of the associated plurality of mini belts 6 are very small, generally in the order of a few centimetres for the channelling surface 5 and of a few tenths of a degree for the plurality of mini belts. This advantageously enables the maintainance of the necessary connection between the upstream end portion of each conveyor branch 6a of a mini belt 6 and the discharge end 7b of the respective corridor 7 of said channelling surface 5 during the operation of the apparatus 1, thus enabling the correct distribution of the toasted bread slices incoming from the channelling surface 5 onto the conveyor branches 6a of the mini belts 6.

Apparatus 1 also enables the sorting and discarding of toasted bread slices in a manner analagous to what is described in the patent application EP 1990778 in the name of the same applicant.

In such regard, each mini belt 6 is provided along its side with a continuous raised edge 11, defining a substantially square relief. The mini belts 6 are operated so that the respective raised edges 11 are all on the same side, and in the top part thereof (active branch 6a or bread slice - conveyor branch), they are all facing upwards.

The mini belts are wide enough to comfortably support, one after the other and in substantial alignment, toasted bread slices 2,3 laid on them, whereas the aforementioned raised borders 11 have a "height" equal to or slightly greater than the thickness of said bread slices 2,3.

As will be shown in the remainder of the description, continuous raised edges 11 serve the purpose of contributing to the alignment of the toasted bread slices on the mini belts 6 and of contributing to the removal and discarding of the defective bread slices 3.

Each mini belt 6 is preferably dragged by a system of pulleys 12,13, and 14 of which at least one is motor-driven and the others being for support, return, and tensioning.

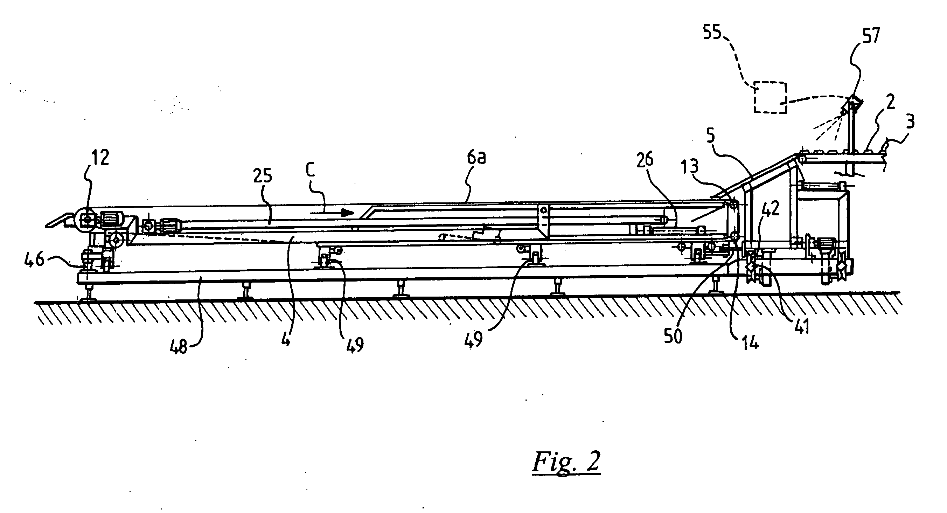

In particular (fig. 2) and according to a preferred but non-limiting embodiment, at the downstream end, each mini belt 6 is supported and moved by a large - diameter motor-driven pulley 12, whereas at the upstream end, it is simply supported and tensioned by pulleys 13 and 14, having a diameter smaller than the motor-driven pulley 12, but reciprocally distanced by a major segment of such diameter so that said mini belt 6 is closed in a ring of essentially triangular profile.

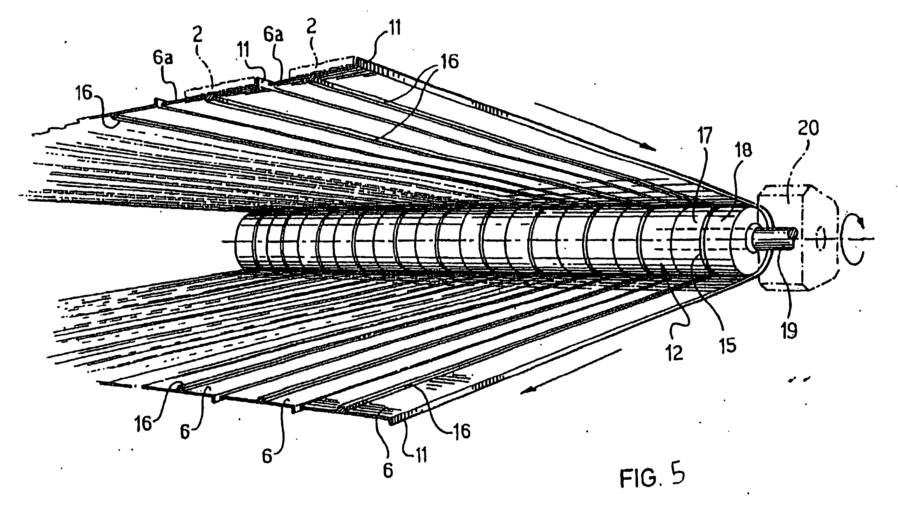

Pulleys 12, 13, 14 advantageously have corrugated surface and are centrally and co-axially provided (fig. 5) with a groove or round depression 15, in each of which is slidably engaged a guide and centring rib 16, placed longitudinally on the lower side of a respective mini belt 6.

Even more specifically, each motor-driven pulley 12 consists of a double pulley-body 17, 18, mounted on a shaft 19, extending across the entire mini belts 6 complex and driven by an electric motor 20. The pulley bodies 17 and 18 are axially distanced by a segment defining the aforementioned round depression 15, to engage and guide rib 16, of a respective mini belt 6.

A conveyor belt 25 is inserted below the plurality of active branches 6a, of the mini belts 6, and is supported and moved in an entirely conventional way in a direction of travel C, opposite to the direction of travel A of said mini belts 6. Such conveyor belt 25 has substantially the same width as the conveyor 10 (consisting of the totality of mini belts 6) and is dedicated to the collection of the defective toasted bread slices 3, discarded according to the method of the invention.

Another conveyor 26 transversally extending below conveyor belt 25 and at the upstream end thereof, receives the defective toasted bread slices 3, unloaded from conveyor 25 and carries them away from the apparatus 1, on the side thereof. Motors for the movement of said conveyor belts 25 and 26 respectively, are also provided.

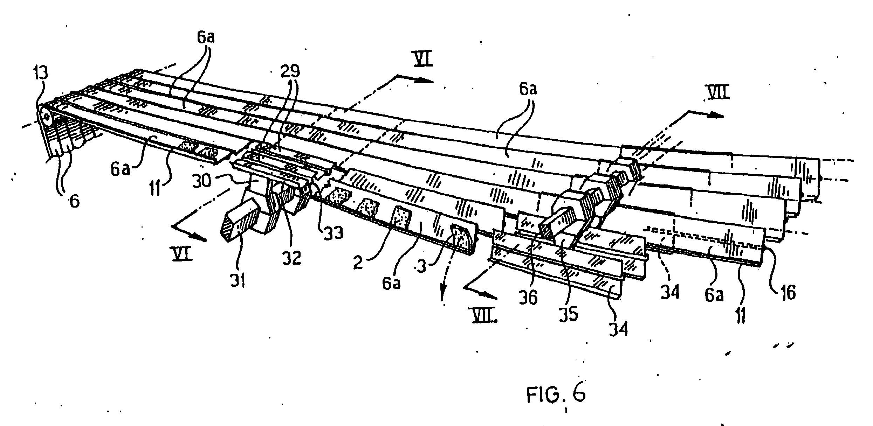

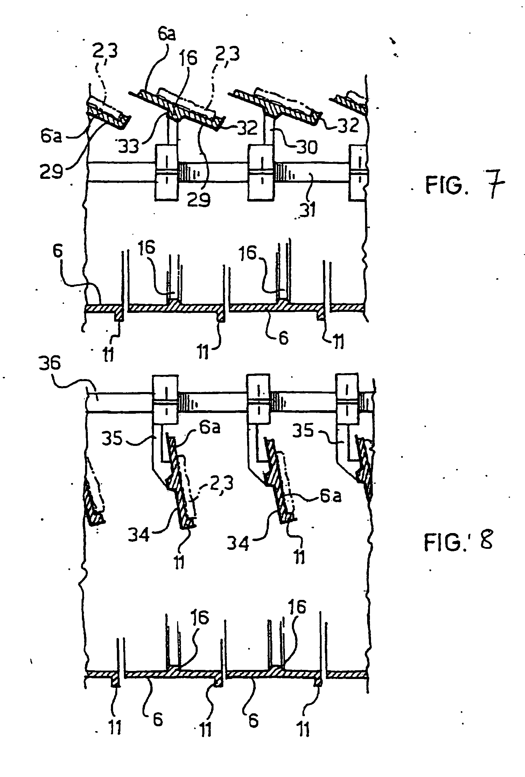

Apparatus 1 also comprises a first plurality of guides 29 (figs 6 to 8), substantially plate-shaped, one for each mini conveyor belt 6, supported by means of respective vertical arms 30, by a single transom 31, of said frame 4, bridging across below the active branches 6a, of said mini belts 6. In particular, said transom 31 together with the plurality of guides 29, is advantageously positioned at about a fourth of the entire length of the mini belts 6, from the upstream end. Plate-shaped guides 29, all the same, are parallel, essentially rectangular with long side extending in the direction of travel A and have predetermined, limited length and width substantially equal to that of said mini belts 6. Each plate-shaped guide 29 is provided, along its long side, with a square raised edge 32, similar in all to raised border 11 of the mini belts 6, which it is intended to engage in the manner described below. A suitably wide and deep groove 33 is provided in the middle of each guide 29, so as to slidably engage the rib of a corresponding mini belt 6.

All of the plate-shaped guides 29 are fixedly supported in a same position horizontally inclined on the side provided with edge 32 and at a level only slightly higher than that of the upstream end of the active branches 6a of said mini belts 6. In particular, the guides 29 are horizontally inclined by a range from 15° to 30°, preferably by about 30°.

Each plate-shaped guide 29 engages a respective mini conveyor belt 6, from below, at its active branch 6a, forcing the latter acquire the same position and inclination. This inclination (about 30°) is achieved by said active branches 6a with a gradual and continual angular shift originating from the upstream end thereof where they are horizontal. It should be noted that with such angular shift and thus with the increase in the inclination, an increasing gap is formed between said branches 6a, as they pass from a substantially reciprocal flanking position to a reciprocal distanced relation. It should also be noted that the "high" position of said guides 29, mentioned above, induces a tensioning effect on the respective active branches 6a of the mini belts 6, in addition to that already exerted by the pulleys 24.

The apparatus 1 also comprises a second plurality of plate-shaped guides 34, structurally and functionally similar to the guides 29 described above. By means of respective arms 35, these guides 24 are supported by a transom 36, bridging across above the plurality of mini belts 6. The guides 34 extend in the direction of travel A and are in a sub vertical position, preferably horizontally inclined by at least 80°; furthermore they are supported at a higher level than that of the previous guides 29. Said guides 34 engage the active branches 6a of the mini belts 6 from below, which are consequently further tensioned and must acquire an about 80° inclined position. As in the previous case, the aforementioned 80° inclination is achieved by a gradual angular shift, continuous and in the same direction as the previous one, of said active branches 6a, originating from guides 29. At the aforementioned 80° inclined position, active branches 6a are more distanced one from the other, and in particular, a gap greater than the width of toasted bread slices 2, 3 is formed between them. The guides 34 are positioned about halfway along the full length of mini belts 6.

A third and final plurality of plate-shaped guides (not shown) identical in all to the guides 29 previously described, is supported at about three quarters of the full length of the mini belts 6, still from their upstream end. Said guides are preferably horizontally inclined as the guides 29 (preferably about 30°) and are supported at their own level by a respective transom, bridging across below the plurality of the aforementioned active branches 6a.

It should be noted that, by means of said guides, the active branches 6a of said mini conveyor belts 6 are returned to a horizontal inclination of about 30° by means of a gradual and continuous angular shift, but in a direction opposite to the previous ones, originating from the guides 34, and that, downstream from said guides, this latter angular shift continues, still gradually, due to the engaging of said active branches 6a with the respective motor-driven pulleys 12, until the horizontal position is reached.

At the downstream end of the apparatus 1, is placed a channelling surface 39, the corridors 39a of which are adapted to receive toasted bread slices 2 from respective active branches 6a of said mini belts 6 and to convey them to a feeding conveyor (not shown) of a packaging machine.

The operation of the apparatus described above will now be briefly described.

A channelled flow of toasted bread slices 2, 3 including both regular toasted bread slices and defective bread slices, exiting a toasting oven on a conveyor belt 8, is continuously fed in a predetermined direction of travel A, first on a channelling surface 5 comprising a plurality of corridors 7, one for each bread slice row, and then to a conveyor 10, consisting of a plurality of mini conveyor belts 6, 6a, one for each bread slice row.

According to the present invention, the aforementioned continuous feeding is carried out in an efficient manner without setback- or product pile-up- related problems as the position of the channelling surface 5 and of the mini belts 6 dragged by it is constantly adjusted as a function of the detection, by means of video cameras 57, of the position of the toasted bread slices approaching the edge of the conveyor belt.

The toasted bread slices fed to the mini belts 6 thus undergo removal and discarding of defective bread slices. Since removal and discarding are identical and identically carried out for each bread slice row of said flow, it will be described with reference to one bread slice row only.

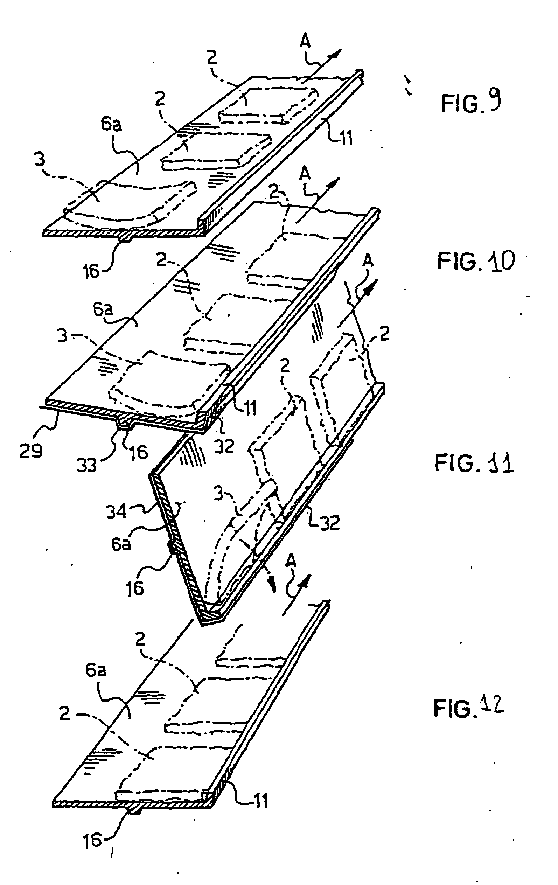

The bread slices 2, 3 of the row in question, just upon arrival on the respective mini belt 6,6a, having a right-angled border 11 along one of the sides thereof, are aligned thereon. For such purpose, said mini belt 6 (more precisely, the active branch 6a thereof) is angularly shifted about an axis parallel to the aforementioned direction of travel A, by its (gradual and continuous) inclination downwards and towards the raised border 11. Bread slices 2,3 abut against said border (Fig. 10, 11), achieving the desired alignment.

The angular shift of the mini belt 6a, around the same axis and still in the same direction, continues until it reaches a sub-vertical inclination of about 80°. During such shift and certainly upon reaching the aforementioned inclination, only the centre of gravity of defective bread slices falls outside said raised border 11, causing said bread slices to fall out from the mini belt 6a, while the regular bread slices remain on the conveyor itself still against the border 11 (Fig. 11).

The aforementioned sub-vertical inclined position is maintained for a predetermined time span (for a certain segment of the path of the conveyor 6a) so as to ensure that all the defective bread slices 3 of said flow are discarded.

Once the sorting and the discarding of the defective bread slices is achieved, the mini belt 6a is angularly shifted around still the same axis, but in the direction opposite to the previous shifts, so as to "return" the regular bread slices remaining on it to a horizontal position.

The discarded defective bread slices are collected by conveyors 25, 26 found below the mini belt 6a in question and are unloaded away from of the apparatus.

To this respect, it should be observed that while reaching the greatest inclination, said mini belts 6a distance themselves one from the other, up to a gap greater than the width of the toasted bread slices, gap through which said defective bread slices can fall on conveyor 25.

The apparatus according to the present invention solves the previously illustrated technical problem and offers many advantages, the first of which consists in the fact that it ensures regular feeding of the toasted bread slices onto the channelling surface and onto the mini belts, and the arrival of regular toasted bread slices only to the packaging machines, thus enabling total automation of bread slice production line, from the toasting oven to the packaging station included.

Another great advantage consists in that all the defective toasted bread slices are automatically discarded, without the aid of personnel and without using complicated apparatuses and devices.

Obviously, an expert in the field may implement many changes and variations to the apparatus described above to satisfy contingent and specific requirements without thereby falling outside the scope of protection of claims here attached.

## Claims

1. Apparatus (1) for handling toasted bread slices (2, 3) sent to packaging, said toasted bread slices being arranged on a conveyor belt (8) in flanking rows and made to travel in a predetermined direction of travel (A) towards a packaging station, the apparatus comprising:
- a channelling surface (5) provided with corridors (7) to receive said flanking toasted bread slice rows incoming from the conveyor (8), a toasted bread slice row in each corridor (7),
- at least one plurality of mini belts (6) arranged downstream from channelling surface (5) relative to the direction of travel (A) of said toasted bread slices (2,3), each mini belt (6) having a bread slice - active conveyor branch (6a) placed so as to receive a toasted bread slice row (2,3) from a corresponding corridor (7) of the channelling surface (5).
the apparatus being **characterized in that** it comprises:
- means of translating said channelling surface (5) in a direction (B) perpendicular to the bread slice - travel direction (A),
- means of binding in translation said at least one plurality of mini belts (6) to the channelling surface (5) at the upstream end of said mini belts and of enabling an angular movement about the opposite downstream end, and
- motor means linked to detection means of the position of toasted bread slices of said flanking rows on said conveyor (8) so as to translate said channelling surface (5) and thereby dragging said at least one plurality of mini belts (6) in the case of a substantial misalignment of said toasted bread slice rows from the respective channelling surface (5) corridors (7), until substantial alignment is restored.

2. Apparatus according to claim 1, **characterized in that** said translating means comprise a support frame (40) of said channelling surface (5) sliding on tracks (41).

3. Apparatus (1) according to claim 2, **characterized in that** said binding means comprise at least one plate (50) associated with the support frame (40) of the channelling surface (5) and cooperating with a pivot (51), said pivot (51) being associated with support frame (4) of said at least one plurality of mini belts (6) substantially at the upstream end thereof.

4. Apparatus (1) according to claim 3, **characterized in that** each plate (50) is provided with a forked or open slit (53) wherein said pivot (51) associated with said support frame (4) of said at least plurality of mini belts (6)is slidably engaged

5. Apparatus (1) according to claim 4, **characterized in that** said support frame (4) of said at least plurality of mini belts (6) is pivoted at a downstream end on a pivot (46) to enable said angular movement.

6. Apparatus (1) according to any one of the preceding claims, **characterized in that** said motor means comprise a motor (44) and a toothed rack system (45).

7. Apparatus (1) according to any one of the preceding claims, **characterized in that** said detection means comprise at least one video camera (57), preferably a pair of video cameras (57) located above said conveyor belt (8) so as to operate over a respective active zone contiguous with the edge of said conveyor belt (8).

8. Apparatus (1) according to claim 7, **characterized in that** it further comprises a command and control unit (55) communicating with said at least one video camera (57) and communicating with said motor means.

9. Apparatus according to any of the preceding claims **characterized in that** it further comprises equipment for automatic sorting and discarding of defective toasted bread slices (3) from said adjacent toasted bread slice rows (2).

10. Apparatus according to claim 9 **characterized in that** for the automatic sorting and discarding of said defective toasted bread slices (3), said mini belts (6) are provided with a squared raised edge (11) along at least one side, and each bread slice conveyor branch (6a) is extended, for at least a segment of said path, in sub vertical inclined position, on said side provided with raised edge (11), means (29,34) being provided to support and guide each bread slice conveyor branch (6a) along said path segment and in said inclined position.

## Patentansprüche

1. Vorrichtung (1) zum Behandeln von getoasteten Brotscheiben (2, 3), die zum Verpacken befördert werden, wobei die getoasteten Brotscheiben auf einem Förderband (8) in benachbarten Reihen angeordnet und in eine vorgegebene Richtung der Bewegung (A) zu einer Verpackungsstation bewegt werden, wobei die Vorrichtung aufweist:
- eine Kanalisierungsfläche (5), die mit Gängen (7) versehen ist, um die benachbarten Reihen getoasteter Brotscheiben, die von dem Förderband (8) ankommen, zu empfangen, eine Reihe getoasteter Brotscheiben in jedem Gang (7),
- mindestens eine Vielzahl von Minibändern (6), die stromabwärts von der Kanalisierungsfläche (5) relativ zu der Richtung der Bewegung (A) der getoasteten Brotscheiben (2, 3) angeordnet sind, wobei jedes Miniband (6) einen aktiven Brotscheibe-Förderzweig (6a) hat, der so angeordnet ist, dass er eine Reihe der getoasteten Brotscheiben (2, 3) von einem entsprechenden Gang (7) der Kanalisierungsfläche (5) empfängt,
wobei die Vorrichtung **dadurch gekennzeichnet ist, dass** sie aufweist:
- eine Einrichtung zum Versetzen der Kanalisierungsfläche (5) in eine Richtung (B) rechtwinklig zu der Brotscheibe-Bewegungsrichtung (A),
- eine Einrichtung zum Koppeln beim Versetzen der mindestens einen Vielzahl von Minibändern (6) mit der Kanalisierungsfläche (5) an dem Stromaufwärtsende der Minibänder und zum Ermöglichen einer Winkelbewegung um das gegenüberliegende Stromabwärtsende, und
- eine Motoreinrichtung, die mit einer Detektionseinrichtung der Position von getoasteten Brotscheiben der benachbarten Reihen auf dem Band (8) derart gekoppelt ist, dass die Kanalisierungsfläche (5) versetzt wird und dabei die mindestens eine Vielzahl von Minibändern (6) in dem Fall einer wesentlichen Fehlausrichtung der Reihen der getoasteten Brotscheiben von den jeweiligen Gängen (7) der Kanalisierungsfläche (5) abgebremst wird, bis eine wesentliche Ausrichtung wiederhergestellt ist.

2. Vorrichtung nach Anspruch 1, **dadurch gekennzeichnet, dass** die Versetzeinrichtung einen Tragrahmen (40) der Kanalisierungsfläche (5) aufweist, der sich auf Schienen (41) bewegt.

3. Vorrichtung (1) nach Anspruch 2, **dadurch gekennzeichnet, dass** die Koppeleinrichtung mindestens eine Platte (50) aufweist, die mit dem Tragrahmen (40) der Kanalisierungsfläche (5) gekoppelt und mit einem Gelenkzapfen (51) zusammenarbeitet, wobei der Gelenkzapfen (51) mit dem Tragrahmen (4) der mindestens einen Vielzahl von Minibändern (6) im Wesentlichen an dem Stromaufwärtsende davon gekoppelt ist.

4. Vorrichtung (1) nach Anspruch 3, **dadurch gekennzeichnet, dass** jede Platte (50) mit einem gabelförmigen oder geöffneten Schlitz (53) versehen ist, worin der Gelenkzapfen (51), der mit dem Tragrahmen (4) der mindestens einen Vielzahl von Minibändern (6) verbunden ist, beweglich in Eingriff ist.

5. Vorrichtung (1) nach Anspruch 4, **dadurch gekennzeichnet, dass** der Tragrahmen (4) der mindestens einen Vielzahl von Minibändern (6) an einem Stromabwärtsende an einem Gelenkzapfen (46) gedreht wird, um die Winkelbewegung zu ermöglichen.

6. Vorrichtung (1) nach einem der vorhergehenden Ansprüche, **dadurch gekennzeichnet, dass** die Motoreinrichtung einen Motor (44) und ein Zahnstangensystem (45) hat.

7. Vorrichtung (1) nach einem der vorhergehenden Ansprüche, **dadurch gekennzeichnet, dass** die Detektionseinrichtung mindestens eine Videokamera (57) aufweist, bevorzugt ein Paar von Videokameras (57), die über dem Förderband (8) derart angeordnet ist bzw. sind, dass sie über einer jeweiligen aktiven Zone arbeitet bzw. arbeiten, die an den Rand des Förderbands (8) angrenzt.

8. Vorrichtung (1) nach Anspruch 7, **dadurch gekennzeichnet, dass** sie weiterhin eine Befehls- und Steuereinheit (55) aufweist, die mit der mindestens einen Videokamera (57) und mit der Motoreinrichtung in Verbindung steht.

9. Vorrichtung nach einem der vorhergehenden Ansprüche, **dadurch gekennzeichnet, dass** sie weiterhin eine Einrichtung für das automatische Aussortieren und Entfernen von fehlerhaften, getoasteten Brotscheiben (3) aus diesen benachbarten Reihen (2) der getoasteten Brotscheiben aufweist.

10. Vorrichtung (1) nach Anspruch 9, **dadurch gekennzeichnet, dass** für das automatische Aussortieren und Entfernen der fehlerhaften, getoasteten Brotscheiben (3) die Minibänder (6) mit einer erhöhten Randkante (11) entlang zumindest einer Seite versehen sind und dass sich jeder Brotscheibe-Förderzweig (6a) für zumindest einen Abschnitt dieses Weges in eine untere, vertikal geneigte Position auf der Seite erstreckt, die mit der erhöhten Randkante (11) versehen ist, wobei eine Einrichtung (29, 34) vorgesehen ist, die jeden Brotscheibe-Förderzweig (6a) entlang diesem Wegabschnitt und in dieser geneigten Position trägt und führt.

## Revendications

1. Appareil (1) de manipulation de tranches (2, 3) de pain grillé envoyées pour emballage, lesdites tranches de pain grillé étant disposées sur une courroie de transport (8) en rangées de flanquement, et étant transportées dans une direction prédéterminé de transport (A) vers une station d'emballage, l'appareil comprenant :
- une surface (5) de canalisation dotée de couloirs (7) permettant de recevoir lesdites rangées de tranches de pain grillé de flanquement provenant du convoyeur (8), une rangée de tranches de pain grillé dans chaque couloir (7),
- au moins une pluralité de mini-courroies (6) disposées en aval de la surface (5) de canalisation par rapport au sens de parcours (A) desdites tranches (2, 3) de pain grillé, chaque mini-courroie (6) comportant une tranche de pain - branche active de convoyeur (6a) placée de manière à recevoir une rangée (2, 3) de tranches de pain grillé à partir d'un couloir correspondant (7) de la surface (5) de canalisation ;
l'appareil **se caractérisant par** le fait de comprendre :
- des moyens de déplacement en translation de ladite surface (5) de canalisation dans une direction (B) perpendiculaire à la tranche de pain - direction (A) de parcours,
- des moyens de liaison en translation de ladite au moins une pluralité de mini-courroies (6) à la surface (5) de canalisation, au niveau de l'extrémité amont desdites mini-courroies, et permettant un mouvement angulaire autour de l'extrémité aval opposée, et
- des moyens de type moteur, liés à des moyens de détection de la position des tranches de pain grillé desdites rangées de flanquement sur ledit convoyeur (8), de manière à décaler ladite surface (5) de canalisation et donc de tirer ladite au moins une pluralité de mini-courroies (6) en cas de défaut d'alignement desdites rangées de tranches de pain grillé à partir des couloirs (7) de la surface respective (5) de canalisation, jusqu'à ce qu'un alignement sensible soit retrouvé.

2. Appareil selon la revendication 1, **caractérisé en ce que** lesdits moyen de translation comprennent un cadre support (40) de ladite surface (5) de canalisation glissant sur les glissières (41).

3. Appareil (1) selon la revendication 2, **caractérisé en ce que** lesdits moyens de liaison comprennent au moins une plaque (50) associée au cadre (40) de soutien de la surface (5) de canalisation, et coopérant avec un pivot (51), ledit pivot (51) étant associé, sensiblement à son extrémité amont, au cadre (4) de soutien de ladite au moins une pluralité de mini-courroies (6).

4. Appareil (1) selon la revendication 3, **caractérisé en ce que** chaque plaque (50) est dotée d'une fente fourchue ou ouverte (53), dans lequel ledit pivot (51) associé audit cadre (4) de soutien de ladite pluralité de mini-courroies (6) est engagé à coulissement.

5. Appareil (1) selon la revendication 4, **caractérisé en ce que** ledit cadre (4) de soutien de ladite pluralité de mini-courroies (6) peut pivoter au niveau d'une extrémité aval, sur un pivot (46), afin de permettre ledit mouvement angulaire.

6. Appareil (1) selon l'une quelconque des revendications précédentes, **caractérisé en ce que** lesdits moyens de type moteur comprennent un moteur (44) et un système (45) de type crémaillère.

7. Appareil (1) selon l'une quelconque des revendications précédentes, **caractérisé en ce que** lesdits moyens de détection comprennent au moins une caméra vidéo (57), de préférence une paire de caméras vidéo (57) située au-dessus de ladite courroie (8) de transport, de manière à opérer sur une zone active respective, contiguë au bord de ladite courroie (8) de transport.

8. Appareil (1) selon la revendication 7, **caractérisé en ce qu'**il comprend en outre une unité (55) de commande et de contrôle qui communique avec ladite au moins une caméra vidéo (57) et avec lesdits moyens de type moteur.

9. Appareil (1) selon l'une quelconque des revendications précédentes, **caractérisé en ce qu'**il comprend un équipement destiné au tri automatique et au rejet de tranches (2, 3) de pain grillé à partir desdites rangées adjacentes de tranches de pain grillé.

10. Appareil (1) selon la revendication 9, **caractérisé en ce que** pour le tri et pour le rejet de tranches défectueuses (3) de pain grillé, lesdites mini-courroies (6) sont dotées d'un bord relevé équarri (11) le long d'au moins un côté, et **en ce que** chaque branche (6a) de convoyeur de tranches de pain est étendue, au moins sur une portion dudit trajet, en position verticale inclinée, sur ledit côté doté d'un bord relevé (11), des moyens (29, 34) étant prévus pour soutenir et pour guider chaque branche (6a) de convoyeur de tranches de pain le long de ladite section de trajet dans ladite position inclinée.
